Europäisches Patentamt

European Patent Office

Office européen des brevets

(11) Veröffentlichungsnummer: **0 509 239 A1**

## EUROPÄISCHE PATENTANMELDUNG

(21) Anmeldenummer: **92104252.9**

(22) Anmeldetag: **12.03.92**

(51) Int. Cl.⁵: **B21D 53/84**

(30) Priorität: **16.04.91 DE 4112365**

(43) Veröffentlichungstag der Anmeldung:
**21.10.92 Patentblatt 92/43**

(84) Benannte Vertragsstaaten:
**DE ES FR GB IT PT SE**

(71) Anmelder: **Balcke-Dürr AG**
**Homberger Strasse 2 Postfach 1240**
**W-4030 Ratingen 1(DE)**

(72) Erfinder: **Podhorsky, Mirsolav, Dr.**
**Am Hang 5**
**W-4030 Ratingen 1(DE)**

(74) Vertreter: **Patentanwälte Dipl.-Ing. Alex**
**Stenger Dipl.-Ing. Wolfram Watzke Dipl.-Ing.**
**Heinz J. Ring**
**Kaiser-Friedrich-Ring 70**
**W-4000 Düsseldorf 11(DE)**

(54) **Nockenwelle.**

(57) Die Erfindung betrifft eine Nockenwelle mit durch hydraulisches Aufweiten auf einer Hohlwelle (1) befestigten Nocken (2), die im Bereich des Exzenters mit mindestens einer von der zentralen Bohrung ausgehenden Vertiefung versehen sind. Um bei ausschließlicher Verwendung eines Kraftschlusses zwischen Nocken (2) und Hohlwelle (1) ausreichend hohe Haltekräfte gegen eine Verdrehung des Nockens (2) gegenüber der aufgeweiteten Hohlwelle (1) zu erzielen, ist die im Bereich des Exzenters ausgebildete Vertiefung als die elastische Verfomung des Nockens (2) während des Aufweitens über den Umfang vergleichmäßigender und im Exzenterbereich vergrößernder Schlitz (3) ausgebildet, dessen Tiefe das Verformungsverhalten des Nockens (2) im Exzenterbereich dem Verformungsverhalten des Nockens (2) im übrigen Bereich angleicht und dessen Breite derart gering ist, daß eine Verformung der Hohlwelle (1) in den Schlitz (3) unterbleibt.

Fig. 6

Die Erfindung betrifft eine Nockenwelle mit durch hydraulisches Aufweiten auf einer Hohlwelle befestigten Nocken, die im Bereich des Exzenters mit mindestens einer von der zentralen Bohrung ausgehenden Vertiefung versehen sind.

Derartige Nockenwellen sind bekannt. Die von ihrer zentralen Bohrung ausgehende Vertiefung ist bei diesen bekannten Nockenwellen derart dimensioniert, daß beim hydraulischen Aufweiten der Hohlwelle Material der Hohlwelle in die Vertiefung des Nockens eindringt, so daß in Umfangsrichtung eine formschlüssige Verbindung zwischen Nocken und aufgeweiteter Hohlwelle erzeugt wird, die ein Verdrehen des Nockens auf der Hohlwelle verhindert.

Damit beim hydraulischen Aufweiten Material der Hohlwelle in die Vertiefung des Nockens eindringt, müssen die Materialeigenschaften der Hohlwelle, die Abmessungen der im Nocken ausgebildeten Vertiefung und die Wandstärke der Hohlwelle derart ausgewählt werden, daß beim hydraulischen Aufweiten keine örtlichen Überbeanspruchungen der Hohlwelle auftreten, die im späteren Betrieb zu Beschädigungen, insbesondere zu Dauerbrüchen führen können. Außerdem ist es erforderlich, daß der Aufweitvorgang unter Verwendung einer Matrize stattfindet, welche die freien Längen der Hohlwelle beim hydraulischen Aufweiten zuverlässig abstützen.

Der Erfindung liegt die **Aufgabe** zugrunde, eine Nockenwelle der eingangs definierten Art zu schaffen, die in der Hohlwelle örtlich erhöhte Spannungen zur Erzielung eines Formschlusses zwischen Nocken und Hohlwelle vermeidet und bei ausschließlicher Verwendung eines Kraftschlusses zwischen Nocken und Hohlwelle ausreichend hohe Haltekräfte gegen eine Verdrehung des Nockens gegenüber der aufgeweiteten Hohlwelle erzielt.

Die **Lösung** dieser Aufgabenstellung durch die Erfindung ist dadurch gekennzeichnet, daß die im Bereich des Exzenters ausgebildete Vertiefung als die elastische Verformung des Nockens während des Aufweitens über den Umfang vergleichmäßigender und im Exzenterbereich vergrößernder Schlitz ausgebildet ist, dessen Tiefe das Verformungsverhalten des Nockens im Exzenterbereich dem Verformungsverhalten des Nockens im übrigen Bereich angleicht und dessen Breite derart gering ist, daß eine Verformung der Hohlwelle in den Schlitz unterbleibt.

Mit der Erfindung wird der Vorteil erzielt, daß der die Elastizität des Nockens im Exzenterbereich erhöhende Schlitz, in den beim hydraulischen Aufweiten kein Material der Hohlwelle eintritt, beim hydraulischen Aufweiten eine Vergleichmäßigung der elastischen Verformung des Nockens über dessen Umfang bewirkt. Diese Vergleichmäßigung des elastischen Verhaltens des Nockens über seinen Umfang hat über den gesamten Umfang gleichmäßige Rückformkräfte zur Folge, wodurch sich insgesamt eine erhebliche Steigerung der Haltekräfte ergibt, die den Nocken aufgrund des Kraftschlusses zwischen Nocken und Hohlwelle auf der Hohlwelle festlegen und gegen eine Verdrehung sichern. Während bei den bekannten Nocken die aufgrund seiner elastischen Rückverformung auftretenden Haltekräfte sich auf den Bereich mit etwa gleichbleibender Wandstärke beschränken, treten beim erfindungsgemäßen Nocken diese Haltekräfte auch im Exzenterbereich auf, da dieser Exzenterbereich durch die erfindungsgemäße Schlitzausbildung bezüglich seines Verformungsverhaltens dem Verformungsverhalten des restlichen, eine etwa gleiche Wandstärke aufweisenden Bereiches angepaßt worden ist. Bei Verwendung gleicher Materialien und desselben Aufweitdruckes lassen sich bei identischen Abmessungen bis zu 30 % höhere Haltekräfte erzielen. Diese reichen auch bei hohen Belastungen der Nockenwelle aus, die Nocken ausschließlich durch Kraftschluß zuverlässig auf der aufgeweiteten Hohlwelle festzuhalten.

Gemäß einem weiteren Merkmal der Erfindung kann der Schlitz in eine im Exzenterbereich ausgebildete Aussparung im Nocken übergehen. Mit einer derartigen Aussparung wird nicht nur eine Gewichtsreduzierung des Nockens erzielt, sondern auch die bisher unvermeidliche Unwucht durch unterschiedliche Massenanhäufungen über den Umfangsbereich des Nockens beseitigt.

Um eine gezielte Anpassung des Verformungsverhaltens des Nockens im Exzenterbereich an das Verfomungsverhalten des Nockens im übrigen Bereich zu erzielen, können gemäß einem weiteren Merkmal der Erfindung mehrere Schlitze im Exzenterbereich des Nockens ausgebildet sein. Die Breite und Tiefe dieser Schlitze können hierbei unterschiedlich gewählt werden.

Auf der Zeichnung sind drei Ausführungsbeispiele der erfindungsgemäßen Nockenwelle und eine Gegenüberstellung des Verfomungsverhaltens eines Nockens nach dem Stande der Technik sowie eines erfindungsgemäßen Nockens dargestellt, und zwar zeigen:

Fig. 1    einen Querschnitt durch eine Hohlwelle und ein erstes Ausführungsbeispiel eines Nockens,

Fig. 2    einen Längsschnitt durch einen Teil einer Nockenwelle gemäß Fig. 1,

Fig. 3    einen der Fig. 1 entsprechenden Querschnitt durch ein zweites Ausführungsbeispiel,

Fig. 4    einen den Fig. 1 und 3 entsprechenden Querschnitt durch ein drittes Ausführungsbeispiel,

Fig. 5    das Verhalten eines Nockens nach dem Stande der Technik bei einer elastischen Verformung aufgrund einer hydraulischen Aufweitung der Hohlwelle und

Fig. 6    das entsprechende Verformungsverhalten eines erfindungsgemäßen Nockens gemäß Fig. 1.

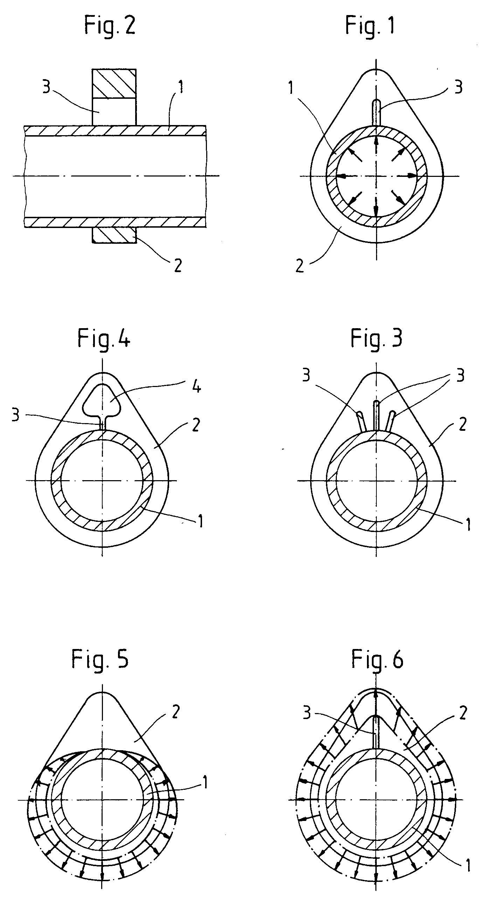

Das in den Fig. 1 und 2 dargestellte erste Ausführungsbeispiel zeigt einen Abschnitt einer Nockenwelle, die aus einer Hohlwelle 1 und auf dieser Hohlwelle 1 durch hydraulisches Aufweiten der Hohlwelle 1 befestigten Nocken, Lagerschalen und ggf. Stirnrädern besteht, wobei im Zusammenhang mit dem in den Fig. 1 und 2 dargestellten Nockenwellenabschnitt lediglich ein Nocken 2 dargestellt ist. Dieser Nocken 2 hat eine zentrale Bohrung, die im Ausgangszustand geringfügig größer als der Außendurchmesser der Hohlwelle 1 ist, so daß der Nocken 2 auf die Hohlwelle 1 in der gewünschten Position und Stellung aufgeschoben werden kann. Anschließend erfolgt ein hydraulisches Aufweiten der Hohlwelle 1 und damit auch des Nockens 2, wie dies durch die Pfeile in Fig. 1 angedeutet ist.

Dieses hydraulische Aufweiten von Hohlwelle 1 und Nocken 2 erfolgt zumindest bezüglich des Nockens 2 ausschließlich im elastischen Bereich. Die nach Abbau des Aufweitdruckes im Inneren der Hohlwelle 1 im Nocken 2 vorhandenen, elastischen Rückformkräfte bewirken einen Preßsitz des Nockens 2 auf der aufgeweiteten Hohlwelle 1, so daß ein Kraftschluß zwischen Nocken 2 und Hohlwelle 1 erzeugt wird, der ein Verschieben oder Verdrehen des Nockens 2 auf der Hohlwelle 1 verhindert.

In Fig. 5 ist das Verformungsverhalten eines bekannten Nockens 2 dargestellt. Es ist zu erkennen, daß sich der Nocken 2 ausschließlich im Bereich etwa gleichbleibender Wandstärke aufweitet und daß im Exzenterbereich aufgrund der hier vorhandenen großen Massenansammlung praktisch keine elastische Aufweitung stattfindet. Die aufgrund der elastischen Aufweitung nach Abbau des Aufweitdruckes vorhandenen Rückformkräfte wirken somit in der Art einer im Exzenterbereich offenen Klammer mit zu den Klammerenden abnehmenden Kräften.

Gemäß den Fig. 1 und 2 ist beim ersten Ausführungsbeispiel der Nocken 2 im Exzenterbereich mit einem Schlitz 3 versehen, dessen Breite jedoch im Hinblick auf die Wandstärke der Hohlwelle 1 derart gering ist, daß beim hydraulischen Aufweiten der Hohlwelle 1 kein Material der Hohlwelle 1 in den Schlitz 3 eindringt. Der Schlitz 3 ist demgemäß nicht dazu bestimmt, durch Eindringen von Material der Hohlwelle 1 eine Art Formschluß zwischen Nocken 2 und Hohlwelle 1 zu bewirken.

Die Wirkung des Schlitzes 3 ist in Fig. 6 dargestellt. Diese Darstellung zeigt, daß durch den Schlitz 3 die elastische Verformung des Nockens 2 während des hydraulischen Aufweitens der Hohlwelle 1 über den Umfang vergleichmäßigt wird. Durch das Vorhandensein des Schlitzes 3 findet auch im Exzenterbereich eine elastische Verformung des Nockens 2 statt. Diese elastische Verformung ist der elastischen Verformung des Nockens 2 im übrigen Bereich angeglichen, wie die Länge der radial verlaufenden Pfeile in Fig. 6 zeigt. Die Ausbildung eines Schlitzes 3 im Exzenterbereich des Nockens 2 bewirkt somit, daß nicht nur die Größe des Kraftschlusses zwischen Nocken 2 und Hohlwelle 1 nach Abbau des Aufweitdruckes erheblich vergrößert wird, sondern daß die elastischen Rückformkräfte nunmehr in der Art eines geschlossenen Ringes wirken, wodurch sich der Kraftschluß zwischen Nocken 2 und Hohlwelle 1 weiterhin entscheidend verbessert.

Um das Verformungsverhalten des Nockens 2 im Exzenterbereich dem Verformungsverhalten des Nockens 2 im übrigen Bereich besser angleichen zu können, können gemäß dem zweiten Ausführungsbeispiel nach Fig. 3 auch mehrere Schlitze 3 ausgebildet werden. Die Anzahl, Länge und Breite dieser Schlitze 3 wird hierbei entsprechend der Form des Nockens 2 und dessen Material gewählt. Die Nocken 2 können aus Stahl bestehen und beispielsweise von einer Profilstange abgeschnitten werden. Weiterhin ist es möglich, die Nocken 2 in der gewünschten Form zu sintern oder zu gießen.

Insbesondere in den letzten Fällen ist es möglich, gemäß dem dritten Ausführungsbeispiel in Fig. 4 anschließend an den Schlitz 3 im Exzenterbereich des Nockens 2 eine Aussparung 4 auszubilden. Diese Aussparung 4 reduziert nicht nur das Gewicht des Nockens 2, sondern vermeidet auch Unwuchten durch unterschiedliche Massenanhäufungen über den Umfang.

## Bezugszeichenliste:

1    Hohlwelle
2    Nocken
3    Schlitz
4    Aussparung

## Patentansprüche

1.    Nockenwelle mit durch hydraulisches Aufweiten auf einer Hohlwelle befestigten Nocken, die im Bereich des Exzenters mit mindestens einer von der zentralen Bohrung ausgehenden Vertiefung versehen sind,
      **dadurch gekennzeichnet,**
      daß die im Breich des Exzenters ausgebildete Vertiefung als die elastische Verformung des Nockens (2) während des Aufweitens über den Umfang vergleichmäßigender und im Exzenterbereich vergrößernder Schlitz (3) ausgebildet ist, dessen Tiefe das Verformungsverhalten des Nockens (2) im Exzenterbereich dem Verformungsverhalten des Nockens (2) im übrigen Bereich angleicht und dessen Breite derart gering ist, daß eine Verformung der Hohlwelle (1) in den Schlitz (3) unterbleibt.

2. Nockenwelle nach Anspruch 1, dadurch gekennzeichnet, daß der Schlitz (3) in eine im Exzenterbereich des Nockens (2) ausgebildete Aussparung (4) übergeht.

3. Nockenwelle nach Anspruch 1 oder 2, dadurch gekennzeichnet, daß mehrere Schlitze (3) im Exzenterbereich des Nockens (2) ausgebildet sind.

Fig. 2

Fig. 1

Fig. 4

Fig. 3

Fig. 5

Fig. 6

Europäisches
Patentamt

**EUROPÄISCHER RECHERCHENBERICHT**

Nummer der Anmeldung

EP    92 10 4252

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | FR-A-2 623 266 (EMITEC)<br>* Seite 2, Zeile 21 - Seite 6, Zeile 12; Abbildung 2 *<br>--- | 1 | B21D53/84 |
| A | EP-A-0 328 009 (EMITEC)<br><br>----- | | |
| | | | **RECHERCHIERTE SACHGEBIETE (Int. Cl.5 )**<br><br>B21D<br>F01L<br>F16H<br>F16D<br>B23P |

Der vorliegende Recherchenbericht wurde für alle Patentansprüche erstellt

| Recherchenort | Abschlußdatum der Recherche | Prüfer |
|---|---|---|
| BERLIN | 05 JUNI 1992 | HOFFMANN M. |